# EUROPEAN PATENT APPLICATION

(11) **EP 4 818 390 A1**
(43) Date of publication of application: **07.10.2026**
(21) Application number: 24914755.4
(22) Date of filing: 20.06.2024
(51) Int. Cl.: D06F 39/00, D06F 39/04, D06F 39/40, D06F 58/22, D06F 58/24, D06F 58/26, B01D 46/10, C02F 1/32, C02F 1/461

(54) **LAUNDRY TREATMENT APPARATUS**

(30) Priority: 02.01.2024 CN 202420005262 U; 02.01.2024 CN 202420005311 U; 02.01.2024 CN 202420007076 U; 02.01.2024 CN 202420005251 U
(71) Applicant: Hisense (Shandong) Refrigerator Co., Ltd., Qingdao, Shandong 266736 (CN)
(72) Inventor: MA, Jie, Qingdao, Shandong 266736 (CN); WANG, Qijian, Qingdao, Shandong 266736 (CN); SONG, Ziyuan, Qingdao, Shandong 266736 (CN); GAO, Shang, Qingdao, Shandong 266736 (CN); NING, Xiao, Qingdao, Shandong 266736 (CN); QIU, Jie, Qingdao, Shandong 266736 (CN); WEI, Dong, Qingdao, Shandong 266736 (CN); JI, Liang, Qingdao, Shandong 266736 (CN); ZHANG, Xinxin, Qingdao, Shandong 266736 (CN); SONG, Qiang, Qingdao, Shandong 266736 (CN); WANG, Qingbo, Qingdao, Shandong 266736 (CN); ZHU, Jiaming, Qingdao, Shandong 266736 (CN); NIE, Guiguo, Qingdao, Shandong 266736 (CN); MA, Hong, Qingdao, Shandong 266736 (CN); DENG, Kaiping, Qingdao, Shandong 266736 (CN); DONG, Xin, Qingdao, Shandong 266736 (CN); FENG, Chen, Qingdao, Shandong 266736 (CN); SHAN, Shiqiang, Qingdao, Shandong 266736 (CN); KONG, Xiangjuan, Qingdao, Shandong 266736 (CN); XUE, Weihai, Qingdao, Shandong 266736 (CN); CAO, Minglei, Qingdao, Shandong 266736 (CN); CHEN, He, Qingdao, Shandong 266736 (CN); ZHAN, Guoqing, Qingdao, Shandong 266736 (CN); JIANG, Yanlong, Qingdao, Shandong 266736 (CN); XING, Zhiyun, Qingdao, Shandong 266736 (CN); LIU, Hong, Qingdao, Shandong 266736 (CN); LUAN, Qiangli, Qingdao, Shandong 266736 (CN); SHI, Weize, Qingdao, Shandong 266736 (CN); LIU, Yuwei, Qingdao, Shandong 266736 (CN)
(74) Representative: Petraz, Gilberto Luigi
(86) International application number: PCT/CN2024/100473
(87) International publication number: WO 2025/145533

(57) **Abstract**

A laundry treatment apparatus, comprising a box (1), a door (42), an outer drum (2), an inner drum (3), a first channel (51) and a condensation tray (52). The outer drum (2) comprises a second cavity (22), a first body, a first opening (21), a first plate (23) and a second opening (231), wherein the second cavity (22) is define in the first body; the second cavity (22) is in communication with the first opening (21); the first plate (23) is located at the end of the first body away from the first opening (21); and the second opening (231) is provided in the first plate (23). The inner drum (3) comprises a third cavity (32), the third cavity (32) being in communication with the second cavity (22). The first channel (51) is provided outside the outer drum (2), a first end of the first channel (51) is in communication with the second opening (231), and a second end of the first channel (51) is in communication with the third cavity (32). The condensation tray (52) is arranged in the second cavity (22) and is connected to the first plate (23); and the condensation tray (52) comprises a shielding area, wherein the shielding area comprises a filtering portion (521) and a first hole (5212), the shielding area being configured to make humid hot air, which has been subjected to heat exchange, enter the first channel (51). The laundry treatment apparatus can shorten the drying time and ensure the drying efficiency.

## Description

This application claims the priority to Chinese Patent Application No. 202420005262.6, filed on January 2, 2024, the priority to Chinese Patent Application No. 202420005311.6, filed on January 2, 2024, the priority to Chinese Patent Application No. 202420007076.6, filed on January 2, 2024, and the priority to Chinese Patent Application No. 202420005251.8, filed on January 2, 2024, the entire contents of which are incorporated herein by reference.

### TECHNICAL FIELD

The present disclosure relates to the field of laundry treatment, and in particular to a laundry treatment apparatus.

### BACKGROUND

The laundry treatment apparatus includes a cabinet, an outer drum, and an inner drum. Furthermore, the laundry treatment apparatus is provided with a first channel, the outer drum is provided with an air return port, hot and humid air generated inside the inner drum flows into the first channel through the air return port, the hot and humid air is dried in the first channel, and the dried air flows back into the inner drum to dry the laundry.

### SUMMARY

Some embodiments of the present disclosure provide a laundry treatment apparatus. The laundry treatment apparatus includes a cabinet, a door, an outer drum, an inner drum, a first channel and a condensing plate. The cabinet includes a first chamber. The door is connected to the cabinet. The outer drum is arranged in the first chamber. The outer drum includes a second chamber, a first body, a first opening, a first plate and a second opening. The second chamber is defined in the first body. The second chamber communicates with the first opening. The first plate is located at one end of the first body away from the first opening. The second opening is formed in the first plate. The inner drum is arranged in the second chamber and can rotate relative to the outer drum. The inner drum includes a third chamber, and the third chamber communicates with the second chamber. The first channel is formed outside the outer drum, a first end of the first channel communicates with the second opening, a second end of the first channel communicates with the third chamber, and the second opening is configured to allow hot and humid air in the third chamber to flow into the first channel. The condensing plate is arranged in the second chamber and connected to the first plate, and the condensing plate is configured to perform heat exchange on the hot and humid air to condense the moisture in the hot and humid air. The condensing plate includes a shielding region. The shielding region is configured to allow the hot and humid air after heat exchange to enter the first channel. The shielding region includes a filtering portion and a first hole. The filtering portion is configured to filter lint from the hot and humid air flowing through the shielding region. The first hole, the first hole penetrates through the shielding region in a thickness direction of the condensing plate.

### BRIEF DESCRIPTION OF THE DRAWINGS

FIG. 1 is a front view of a laundry treatment apparatus according to some embodiments.
FIG. 2 is a structural diagram of a laundry treatment apparatus with a door removed according to some embodiments.
FIG. 3 is another structural diagram of a laundry treatment apparatus with a door removed according to some embodiments.
FIG. 4 is a structural diagram of an outer drum according to some embodiments.
FIG. 5 is another structural diagram of an outer drum according to some embodiments.
FIG. 6 is still another structural diagram of an outer drum according to some embodiments.
FIG. 7 is a structural diagram of a condensing plate according to some embodiments.
FIG. 8 is a partially enlarged view of the condensing plate in FIG. 7.
FIG. 9 is a structural diagram of a condensing plate and an outer drum according to some embodiments.
FIG. 10 is another structural diagram of a condensing plate and an outer drum according to some embodiments.
FIG. 11 is another structural diagram of an outer drum according to some embodiments.
FIG. 12 is another structural diagram of a condensing plate according to some embodiments.
FIG. 13 is still another structural diagram of an outer drum according to some embodiments.
FIG. 14 is a partially enlarged view of the outer drum in FIG. 13.
FIG. 15 is a partially enlarged view of a first plate and a rotating shaft according to some embodiments.
FIG. 16 is a structural diagram of an outer drum, a rotating shaft and an adapting portion according to some embodiments.
FIG. 17 is a structural diagram of an outer drum and a rotating shaft according to some embodiments.
FIG. 18 is a structural diagram of an adapting portion according to some embodiments.
FIG. 19 is a structural diagram of a rotor according to some embodiments.
FIG. 20 is a structural diagram of a stator, a rotating shaft and an adapting portion according to some embodiments.
FIG. 21 is still another structural diagram of an outer drum according to some embodiments.
FIG. 22 is another partially enlarged view of an outer drum according to some embodiments.
FIG. 23 is still another partially enlarged view of an outer drum according to some embodiments.
FIG. 24 is another partially enlarged view of an outer drum according to some embodiments.
FIG. 25 is an exploded view of an outer drum and an electrical box according to some embodiments.
FIG. 26 is a partially enlarged view of area A in FIG. 25.
FIG. 27 is still another partially enlarged view of an outer drum according to some embodiments.
FIG. 28 is still another partially enlarged view of an outer drum according to some embodiments.
FIG. 29 is still another partially enlarged view of an outer drum according to some embodiments.

### DETAILED DESCRIPTION OF THE EMBODIMENTS

Hereinafter, some embodiments of the present disclosure will be clearly and completely described with reference to the accompanying drawings, and it is obvious that the described embodiments are only a part of the embodiments of the present disclosure, but not all embodiments. Based on the embodiments provided by the present disclosure, all other embodiments obtained by those of ordinary skill in the art should be included in the scope of protection of the present disclosure.

Unless the context requires otherwise, throughout the description and claims, the term "comprise" and other forms thereof, such as the third-person singular form "comprises" and the present participle form "comprising" are construed in an open, inclusive meaning, that is, "comprising, but not limited to." In the description, the terms "one embodiment," "some embodiments," "exemplary embodiments," "example," "specific example," or "some examples," etc. are intended to indicate that a particular feature, structure, material, or characteristic related to the embodiment or example is included in at least one embodiment or example of the present disclosure. The schematic illustration of the above terms does not necessarily refer to the same embodiment or example. Moreover, the specific features, structures, materials or characteristics may be included in any one or more embodiments or examples in any appropriate manner.

Hereinafter, the terms "first" and "second" are for descriptive purposes only, and are not to be understood as indicating or implying relative importance or as implicitly indicating the number of technical features indicated. Thus, the feature defined by "first" and "second" may explicitly or implicitly include one or more features. In the description of the embodiments of the present disclosure, unless otherwise specified, "a plurality of" means two or more.

When some embodiments are described, the expressions "coupled", "connected" and derivatives thereof may be used. The term "connected" should be understood in a broad sense, for example, "connected" may refer to a fixed connection, or refer to a detachable connection or an integral connection, and may refer to a direct connection or an indirect connection through an intermediate medium. The term "coupled" indicates that two or more components are in direct physical contact or electric contact. The term "coupled" or "communicatively coupled" may also refer to that two or more components are not in direct contact, but still cooperate or interact with each other. The embodiments disclosed herein are not necessarily limited to the content of this disclosure.

The expression "at least one of A, B and C" has the same meaning as the expression "at least one of A, B or C", and both include the following combinations of A, B, and C: only A, only B, only C, a combination of A and B, a combination of A and C, a combination of B and C, and a combination of A, B and C.

"A and/or B" includes three combinations of only A, only B, and a combination of A and B.

The use of "applicable to" or "configured to" herein means open and inclusive language that does not exclude devices applicable to or configured to perform additional tasks or steps.

As used herein, "about", "substantially" or "approximately" includes a stated value as well as an average within an acceptable range of deviation from a particular value, where the acceptable range of deviation is determined by those of ordinary skill in the art considering the measurement in question and the error associated with the measurement of a particular amount (i.e., limitations of the measurement system).

As used herein, terms such as "parallel", "perpendicular" and "equal" include both the stated conditions and conditions that are approximate to the stated ones, with the range of approximation falling within an acceptable deviation, where the acceptable range of deviation is as determined by those of ordinary skill in the art considering the measurement in question and the error associated with the measurement of a particular quantity (i.e., limitations of the measurement system). For example, "parallel" encompasses both absolute parallelism and approximate parallelism, where the acceptable deviation range for approximate parallelism may be, for instance, within 5° of deviation; similarly, "perpendicular" includes both absolute perpendicularity and approximate perpendicularity, with an acceptable deviation range for approximate perpendicularity that can also be, for example, within 5° of deviation. "Equal" includes both absolute equality and approximate equality, where the acceptable deviation range for approximate equality may be, for example, a difference between the two quantities being compared that is less than or equal to 5% of either quantity.

Some embodiments of the present disclosure provide a laundry treatment apparatus 100. For example, the laundry treatment apparatus 100 may include a washing machine, a dry cleaning machine or a drum-type washing-drying integrated machine.

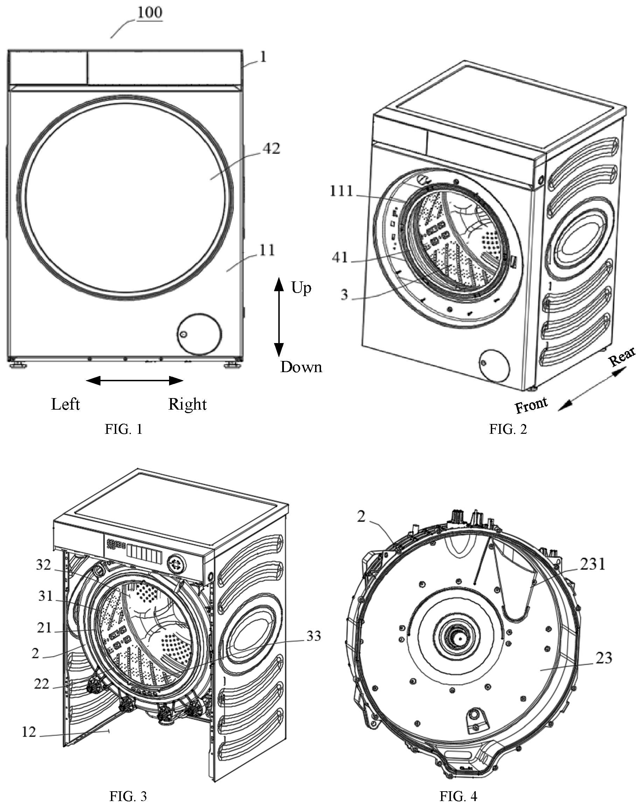

Referring to FIG. 1, the laundry treatment apparatus 100 includes a cabinet 1. The cabinet 1 includes a first chamber 12 (an accommodation space).

Referring to FIG. 3, the laundry treatment apparatus 100 further includes an outer drum 2, and the outer drum 2 is located in the first chamber 12.

Referring to FIG. 2, the cabinet 1 further includes a third opening 111 (a loading port), and the third opening 111 is located on a front side of the cabinet 1. For example, one side of the cabinet 1 close to a user is the front side.

It should be noted that a direction from the bottom of the cabinet 1 to the top of the cabinet 1 is a height direction (an up-down direction shown in FIG. 1) of the cabinet 1, a direction from one side of the cabinet 1 to the other side of the cabinet 1 is a width direction (a left-right direction shown in FIG. 1) of the cabinet 1, a direction from the front side of the cabinet 1 to one side of the cabinet 1 away from the third opening 111 and facing the user is a front-rear direction (a front-rear direction shown in FIG. 2), and the width direction, the front-rear direction and the height direction of the cabinet 1 are perpendicular to one another.

In some embodiments, referring to FIG. 3, the cabinet 1 further includes a first chamber 12, the first chamber 12 is formed in the cabinet 1, the first chamber 12 communicates with the third opening 111, and the outer drum 2 is arranged in the first chamber 12.

In some embodiments, the cabinet 1 further includes a third plate 11 (a front plate) arranged on a side of the cabinet, and the third plate 11 is arranged on the front side of the cabinet. For example, the third opening 111 is arranged on the third plate 11.

In some embodiments, referring to FIG. 2, the laundry treatment apparatus 100 further includes an inner drum 3, the inner drum 3 is arranged in the second chamber 22, and the inner drum 3 can rotate relative to the outer drum 2.

In some embodiments, referring to FIG. 3, the outer drum 2 includes a first body. The outer drum 2 includes a first opening 21 (an outer drum opening). The first opening 21 is formed at one end of the first body close to the third plate 11.

In some embodiments, referring to FIG. 3, the outer drum 2 further includes a second chamber 22 (an outer drum chamber), the second chamber 22 is defined in the first body, and the second chamber 22 communicates with the first opening 21, the second chamber 22 can hold water, and the inner drum 3 is arranged in the second chamber 22.

In some embodiments, referring to FIG. 3, the inner drum 3 includes a fourth opening 31 (an inner drum opening), and the fourth opening 31 is formed at a front end of a second body.

It should be noted that the front end of the second body is an end of the inner drum 3 close to the fourth opening 31.

In some embodiments, referring to FIG. 3, the inner drum 3 further includes a third chamber 32 (a washing chamber), the third chamber 32 communicates with the second chamber 22, the third chamber 32 communicates with the fourth opening 31, and the third chamber 32 also communicates with the third opening 111.

In some embodiments, referring to FIG. 3, the inner drum 3 further includes a fourth plate 33 (an inner drum side peripheral wall), and the fourth plate 33 is provided with a water permeable hole penetrating through the fourth plate, and water can enter and exit the third chamber 32 through the water permeable hole.

For example, the user can place laundry to be washed into the inner drum 3 through the third opening 111, the first opening 21 and the fourth opening 31.

In some embodiments, referring to FIG. 1, the laundry treatment apparatus 100 further includes a door 42, and the door 42 is rotatably connected to the cabinet and configured to open or close the third chamber 32.

For example, the door 42 is rotatably connected to the third plate 11; when the door 42 rotates in a direction away from the third plate 11, the third opening 111 is opened, and laundry can be placed through the third opening 111; and when the door 42 rotates in a direction toward the third plate 11, the third opening 111 is closed.

In some embodiments, referring to FIG. 1 to FIG. 3, the laundry treatment apparatus 100 further includes a door seal 41, the door seal 41 is located between the third opening 111 and the first opening 21, and the door seal 41 is configured to seal a gap between the third opening 111 and the first opening 21, thereby preventing washing water in the outer drum 2 from flowing out of the outer drum 2 through a gap between the cabinet and the outer drum 2 and entering the cabinet 1.

In some embodiments, referring to FIG. 4 to FIG. 6, the outer drum 2 further includes a first plate 23 (an outer drum rear wall), and the first plate 23 is arranged at a rear end of the first body away from the first opening 21.

In some embodiments, referring to FIG. 4-6, the laundry treatment apparatus 100 further includes a first channel 51 (a drying air duct), and the first channel 51 is formed outside the outer drum 2. The first plate 23 includes a second opening 231 (an air return port). A first end of the first channel 51 communicates with the second opening 231, and a second end of the first channel communicates with the third chamber 32.

In some embodiments, the first end of the first channel 51 passes through the door seal 41 and communicates with the third chamber 32. For example, air in the first channel 51 passes through the door seal 41 and the fourth opening 31, and enters the inner drum 3.

In some embodiments, the laundry treatment apparatus 100 further includes a drying device. The drying device is arranged in the first channel 51, and the drying device is configured to dry hot and humid air entering the first channel 51.

During drying, the air in the inner drum 3 exchanges heat with the laundry to form hot and humid air, and the second opening 231 is configured to enable the hot and humid air in the third chamber 32 to flow into the first channel 51. That is, the hot and humid air enters the outer drum 2 and then enters the first channel 51 through the second opening 231, the hot and humid air is dried in the first channel 51 to form dry air, and the dry air flows into the third chamber 32 through the second end of the first channel 51 so as to exchange heat with the laundry to dry the laundry.

In some embodiments, the hot and humid air is dried through the first channel 51 and the drying effect is poor. Therefore, a condenser can be arranged on a rear side of the first plate 23, so that as the hot and humid air can be condensed before entering the first channel 51 or when entering the first channel 51, thereby reducing the temperature and humidity of the hot and humid air. However, in related art, the condenser is generally arranged on a rear side of the first plate 23, thereby affecting the heat exchange efficiency between the condenser and the hot and humid air. Since the dehumidification effect of the condenser on the hot and humid air is reduced, the hot and humid air is difficult to dry, and the laundry drying time is prolonged. Furthermore, after long-term operation, a small amount of lint that cannot be flushed away in the third chamber 32 is subjected to repeated spraying, wetting and drying, resulting in a large amount of lint in the third chamber 32. During air circulation, the air easily carries the lint into the first channel 51, so that the lint is attached to an inner surface of the first channel 51 and a surface of the drying device. After long-term accumulation, the smoothness of the first channel 51 and the heat exchange between the drying device and the air will be affected, leading to longer drying time.

To solve the above problems, some embodiments of the present disclosure provide a laundry treatment apparatus 100. Hot and humid air generated from laundry in a third chamber 32 of an inner drum 3 enters an outer drum 2, the hot and humid air flows from one side of a condensing plate close to a first opening 21 to the condensing plate, the hot and humid air exchanges heat with the condensing plate to condense moisture in the hot and humid air, the hot and humid air passes through a filtering portion 5211 and a first hole 5212 (an air passage hole) and flows to a second opening 231, the hot and humid air passing through the second opening 231 enters the first channel 51, and the filtering portion 5211 filters out lint from the hot and humid air flowing through a shielding region 521.

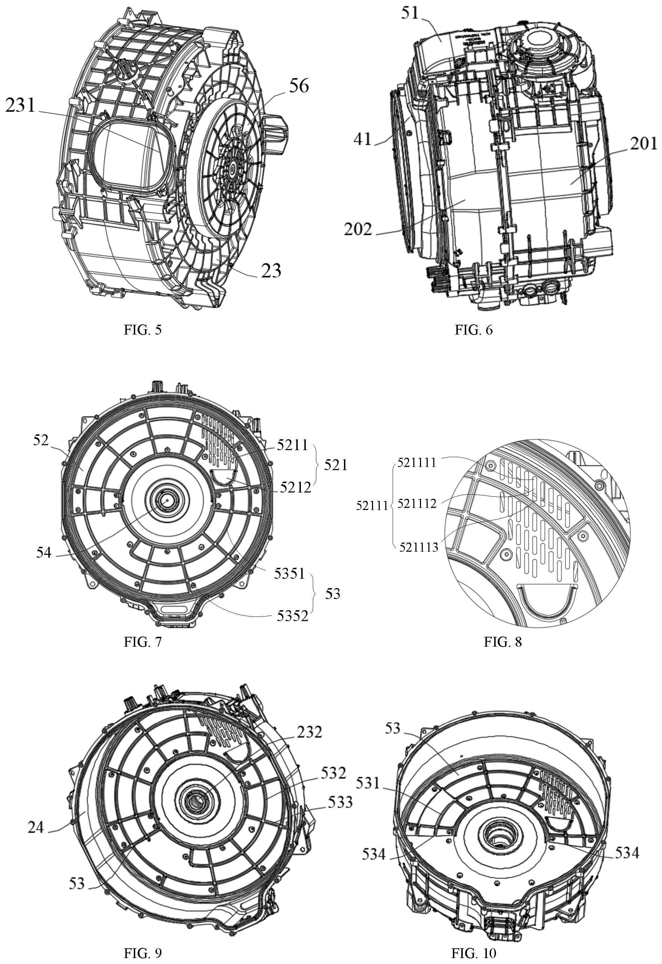

Referring to FIG. 7, the condensing plate 52 is arranged in a second chamber 22, so that the condensing plate 52 can condense water from the hot and humid air, thereby achieving a pre-dehumidification effect on the hot and humid air, reducing the burden on the drying device in the first channel 51, improving the dryness of the hot and humid air after drying, and shortening the drying time for the laundry.

Furthermore, the filtering portion 5211 is arranged at the shielding region 521 of the condensing plate 52, so that lint in the air can be filtered out, thereby preventing the lint from entering the first channel 51, ensuring the heat exchange efficiency in the first channel 51 and shortening the drying time; and a first hole 5212 (an air passage hole) is formed at the shielding region 521, thereby ensuring a return air volume and the drying efficiency.

In some embodiments, referring to FIG. 7, the laundry treatment apparatus 100 further includes a condensing plate 52, the condensing plate 52 is arranged in the second chamber 22, the condensing plate 52 is connected to one side of the first plate 23 close to the third plate 11 (such as a front side of the first plate 23), and the condensing plate 52 is configured to exchange heat with the hot and humid air, so that the moisture in the hot and humid air is condensed.

In some embodiments, referring to FIG. 7, the condensing plate 52 includes a shielding region 521, and the shielding region 521 is configured to shield the second opening 231.

It should be noted that the second opening 231 is formed in an upper part of the first plate 23. The setting position of the shielding region 521 is adapted to the setting position of the second opening 231.

In some embodiments, referring to FIG. 3 and FIG. 7, the shielding region 521 includes a filtering portion 5211. The filtering portion 5211 communicates the second opening 231 with an accommodation space of one side of the condensing plate 52 close to the first opening 21, and the filtering portion 5211 is configured to filter lint from the hot and humid air flowing through the filtering portion 5211.

In some embodiments, referring to FIG. 3 and FIG. 7, the shielding region 521 further includes a first hole 5212, and the first hole 5212 also communicates the second opening 231 with the accommodation space of one side of the condensing plate close to the first opening 21. In this way, the hot and humid air after heat exchange can flow into the first channel 51 through the first hole 5212.

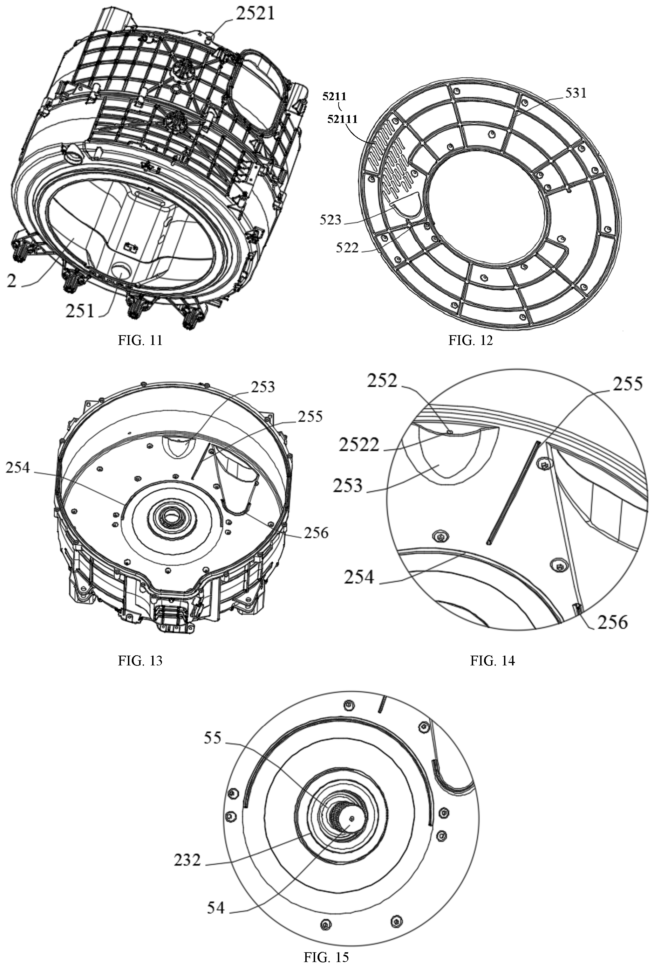

In some embodiments, referring to FIG. 12, the filtering portion 5211 includes at least one second hole 52111 (a filtering hole). In this way, the second hole 52111 facilitates the filtration of the lint in the hot and humid air flowing through the filtering portion 5211.

For example, a length direction of any second hole 52111 of the at least one second hole 52111 is parallel to a height direction of the cabinet 1.

In some embodiments, when the length of the second hole 52111 is less than 15 mm, the number of the second holes 52111 formed in the condensing plate 52 will be increased; and as the length of the second hole 52111 decreases, the production cost is increased.

In some embodiments, when the length of the second hole 52111 is greater than or equal to 15 mm, for example, the length of the second hole 52111 is 15 mm, 20 mm or 25 mm, the number of the second holes 52111 formed in the condensing plate 52 can be reduced, thereby reducing the manufacturing cost of the condensing plate 52 on the premise of ensuring the filtering effect.

In some embodiments, when the length of the second hole 52111 is greater than 30 mm, the structural strength of the condensing plate 52 will be reduced; and as the length of the second hole 52111 increases, the service life of the condensing plate 52 will be affected.

In some embodiments, when the length of the second hole 52111 is less than or equal to 30 mm, for example, the length of the second hole 52111 is 20 mm, 25 mm or 30 mm, the structural strength of the condensing plate 52 can be enhanced, thereby prolonging the service life of the condensing plate 52.

In some embodiments, when the length of the second hole 52111 is greater than equal to 15 mm, and the length of the second hole 52111 is less than or equal to 30 mm, for example, the length of the second hole 52111 is 15 mm, 20 mm, 25 mm or 30 mm, the production of the condensing plate 52 can be reduced, the structural strength of the condensing plate 52 can be enhanced, and the service life of the condensing plate 52 can be prolonged.

In some embodiments, when the width of the second hole 52111 is less than 3 mm, lint in the air may clog the second hole 52111; and as the width of the second hole decreases, the return air volume will be reduced, thereby prolonging the drying time.

In some embodiments, when the width of the second hole 52111 is greater than or equal to 3 mm, for example, the width of the second hole 52111 is 3 mm, 4 mm or 5 mm, the width of the second hole 52111 formed in the condensing plate 52 can be increased, thereby increasing the return air volume and improving the drying efficiency.

In some embodiments, when the width of the second hole 52111 is greater than 7 mm, as the width of the second hole 52111 increases, lint in the air may flow into the first channel 51, so that the lint is attached to the inner surface of the first channel 51, thereby affecting the heat exchange effect.

In some embodiments, when the width of the second hole 52111 is less than or equal to 7 mm, for example, the width of the second hole 52111 is 5 mm, 6 mm or 7 mm, the lint in the air can be prevented from entering the first channel 51.

In some embodiments, when the width of the second hole 52111 is greater than or equal to 3 mm and the width of the second hole 52111 is less than or equal to 7 mm, for example, the width of the second hole 52111 is 4 mm, 5 mm or 6 mm, the lint in the air can be prevented from entering the first channel 51, the return air volume is increased, and the drying efficiency is improved.

In some embodiments, referring to FIG. 8, the second hole 52111 includes a first section 521111 (an upper section of the filtering hole), and in the height direction of the cabinet 1, the first section 521111 is located above the filtering portion 5211.

The second hole 52111 further includes a second section 521112 (a middle section of the filtering hole), and in the height direction of the cabinet 1, the second section 521112 is located below the first section 521111.

The second hole 52111 further includes a third section 521113 (a lower section of the filtering hole), and in the height direction of the cabinet 1, the third section 521113 is located below the second section 521112.

For example, the second section 521112 is located between the first section 521111 and the third section 521113.

It should be noted that a longitudinal cross-section of the first section 521111 is semicircular, a longitudinal cross-section of the second section 521112 is rectangular, and a longitudinal cross-section of the third section 521113 is semicircular. Here, the longitudinal cross-section refers to a cross-section in the front-rear direction of the cabinet 1.

In some embodiments, when the second hole 52111 includes the second section 521112, the width of the second section 521112 is greater than or equal to 3 mm and less than or equal to 7 mm. It should be noted that the width of the second section 521112 is substantially the same as the width of the second hole 52111, and the setting principle of the width of the second section 521112 is similar to that of the second hole 52111, which will not be described in detail here. For example, the width of the second section 521112 may be 5 mm.

In some embodiments, in the case where the at least one second hole 52111 includes a plurality of second holes 52111, the plurality of second holes 52111 are arranged in at least one row, and each row of second holes 52111 are arranged along an extension direction of the arc of the condensing plate 52.

It should be noted that the extension direction of the arc refers to a circumferential direction of the condensing plate 52.

For example, when the second holes 52111 are arranged in a plurality of rows, arcs along which any two rows of the plurality of rows of second holes 52111 are arranged are arcs with the same center.

It should be noted that the center of the arc along which the second holes 52111 are arranged is located on a rotating shaft of the inner drum 3.

In some embodiments, referring to FIG. 7 and FIG. 8, taking a plane perpendicular to the axial direction of the outer drum 2 as a reference plane, the area of the orthographic projection of the first plate 23 on the reference plane is M1, the area of the orthographic projection of the condensing plate 52 on the reference plane is M2, and the area of the orthographic projection on the reference plane is M2.

It should be noted that M1 is greater than M2, thereby facilitating the arrangement of the condensing plate 52 in the second chamber 22.

In some embodiments, M1 and M2 satisfy the following relational expression: M2/M1>1/4.

In some embodiments, when M2/M1≤1/4, the condensing plate 52 is too small; and as M2/M1 decreases, the condensation performance is poor and the drying time is prolonged.

In some embodiments, when M2/M1>1/4, the area of the condensing plate 52 is increased, thereby preventing the condensing plate 52 from being too small and resulting in poor condensation performance; and as M2/M1 increases, the pre-dehumidification effect can be improved, the burden on the drying device in the first channel 51 can be reduced, the drying degree of the hot and humid air after drying can be increased, and the drying time for the laundry can be shortened.

In some embodiments, referring to FIG. 5, FIG. 7 and FIG. 8, the area of the second opening 231 on the reference plane is M3, the area of the first hole 5212 on the reference plane is M4, M4 is less than M3, and M3 and M4 satisfy the following relational expression: 1>M4/M3≥1/4.

In some embodiments, when 1≤M4/M3, since the area of the first hole 5212 is large, as M4/M3 increases, lint will flow into the first channel 51 through the first hole 5212.

In some embodiments, when 1>M4/M3, for example, M4/M3 is 1/4, 2/4 or 3/4, the area of the first hole 5212 is reduced, so that the second hole 52111 can block some lint, thereby reducing the amount of lint flowing into the first channel 51 through the first hole 5212.

In some embodiments, when 1/4>M4/M3, the area of the first hole 5212 is small, so that the resistance to air flowing into the first channel 51 is increased, and the amount of air flowing into the first channel 51 through the first hole 5212 is reduced; and as M4/M3 decreases, the drying efficiency will be reduced.

In some embodiments, when 1/4≤M4/M3, for example, M4/M3 is 1/4, 2/4 or 3/4, it is beneficial for the air to flow into the first channel 51, thereby improving the drying efficiency.

In some embodiments, when 1/4≤M4/M3<1, for example, M4/M3 is 1/4, 2/4 or 3/4, the second hole 52111 can block some lint, thereby reducing the lint flowing into the first channel 51 through the first hole 5212, reducing the return air resistance, ensuring the return air volume, and ensuring the drying efficiency.

In some embodiments, the area of the second hole 52111 on the reference plane is M5, and M4 and M5 satisfy the following relational expression: M5<M4. In this way, the filtering effect of the second hole 52111 can be ensured, and the excessive size of the second hole 52111 can be avoided, thereby preventing a large amount of lint from flowing into the first channel 51 through the second hole 52111.

In some embodiments, referring to FIG. 7 to FIG. 9, the first plate 23 further includes a third hole 232 (an outer drum through hole), and the third hole 232 penetrates through the first plate 23 in the front-rear direction of the cabinet 1. For example, the central axis of the third hole 232 may be located on the central axis of the inner drum 3.

In some embodiments, referring to FIG. 7, the laundry treatment apparatus 100 further includes a rotating shaft 54 (a first rotating column), the rotating shaft 54 is arranged in the third hole 232, the rotating shaft 54 is rotatably connected to the inner drum 3, and the rotating shaft 54 is configured to drive the inner drum 3 to rotate relative to the outer drum 2.

In some embodiments, referring to FIG. 7, the condensing plate 52 is arranged outside the third hole 232.

In some embodiments, referring to FIG. 9, the outer drum 2 further includes a second plate 24 (an outer drum side peripheral wall), the second plate 24 is arranged around the first plate 23, the second plate 24 is connected to the first plate 23, and the first plate 23 and the second plate 24 jointly define the second chamber 22.

In some embodiments, the condensing plate 52 is located between the third hole 232 and the second plate 24.

In some embodiments, referring to FIG. 9 and FIG. 10, the condensing plate 52 is annular or annular with a notch.

For example, when the condensing plate 52 is annular, the condensing plate 52 is sleeved outside the rotating shaft 54, and the condensing plate 52 surrounds an outer side of the third hole 232.

It should be noted that when the condensing plate 52 is annular, the condensing plate 52 may be a ring; and when the condensing plate 52 is a ring, the center of the condensing plate 52 is located on the rotating shaft of the inner drum 3.

For another example, when the condensing plate 52 is annular with a notch, the condensing plate 52 may be of a semi-annular shape or other shapes, and the condensing plate 52 is arranged between the third hole 232 and the second plate 24.

It should be noted that when the condensing plate 52 is annular with a notch, at least one of the contour of one side of the condensing plate 52 close to the third hole 232 or the contour of one side of the condensing plate 52 away from the third hole 232 may be an arc, and the center of the arc is located on the rotating shaft of the inner drum 3.

In some embodiments, referring to FIG. 5, FIG. 9 and FIG. 10, the condensing plate 52 and the first plate 23 form a fourth chamber 53 located therebetween, and the fourth chamber 53 is configured for condensate water to enter and exit.

In some embodiments, referring to FIG. 11, the outer drum 2 includes a second water outlet 251 (a drain outlet), and condensate water flows into the outer drum 2 and is discharged from the outer drum 2 through the second water outlet 251 formed in the outer drum 2. In this way, the condensate water can be introduced into the fourth chamber 53, the temperature of the condensing plate 52 can be ensured not to be too high, and the condensation effect of the condensing plate 52 on the hot and humid air can be ensured for a long time.

For example, referring to FIG. 9 to FIG. 11, water in the fourth chamber 53 can flow to the bottom of the outer drum 2 through the fourth chamber 53 between the condensing plate 52 and the first plate 23.

Referring to FIG. 10, the outer drum 2 further includes a fifth opening 534 (a condensing chamber opening), the fourth chamber 53 communicates with the fifth opening 534, the fourth chamber 53 communicates with an outer drum space on the front side of the condensing plate 52 (such as the third chamber 32) through the fifth opening 534, and the condensate water in the fourth chamber 53 flows into the outer drum 2 through the fifth opening 534, and then is discharged through the second water outlet 251 in the outer drum 2.

In some embodiments, referring to FIG. 12, the condensing plate 52 further includes a condensing portion 531 (a condensing groove), and the condensing portion 531 is located on one side (such as a rear side of the first plate 23 of the outer drum) of the condensing plate 52 close to the first plate 23. For example, one side of the condensing plate 52 close to the first plate 23 is recessed toward one side away from the first plate 23 to form the condensing portion 531, and a protrusion is formed on one side (such as a front side of the first plate 23 of the outer drum) of the condensing plate 52 away from the first plate 23, and the fourth chamber 53 is formed between a side wall of the condensing portion 531 and the first plate 23.

In some embodiments, referring to FIG. 9 to FIG. 11, the fourth chamber 53 includes a first sub-chamber 532.

For example, the first sub-chamber 532 surrounds an outer side of the third hole 232, and an extension direction of the first sub-chamber 532 is arc-shaped or circular.

It should be noted that the fourth chamber 53 includes one or more first sub-chambers 532 (first condensing chambers).

In some embodiments, referring to FIG. 9 to FIG. 11, the fourth chamber 53 further includes a second sub-chamber 533 (a second condensing chamber), and the first sub-chamber 532 communicates with the second sub-chamber 533.

A first end of the second sub-chamber 533 is an end of the second sub-chamber 533 close to the third hole 232, and a second end of the second sub-chamber 533 is an end of the second sub-chamber 533 away from the third hole 232.

It should be noted that the fourth chamber 53 includes one or more second sub-chambers 533, and the plurality of second sub-chambers 533 are distributed radially, for example, the plurality of second sub-chambers 533 extend in a radial direction of the inner drum 3 and are arranged at intervals in a circumferential direction of the inner drum 3.

The extension direction of the second sub-chamber 533 toward the third hole 232 intersects with the rotating shaft of the inner drum 3.

In some embodiments, the first sub-chamber 532 and the second sub-chamber 533 are located on two sides of a vertical line passing through the center of the first water outlet 2522 (a water outlet).

In some embodiments, referring to FIG. 13 and FIG. 14, the outer drum 2 includes a second channel 252 (a condensate water inlet channel), the second channel 252 is configured to allow condensate water to pass through, a water inlet 2521 (a condensate water inlet) is formed at a top end of the second channel 252, a first water outlet 2522 (a channel outlet) is formed at a bottom end of the second channel 252, the height of the water inlet 2521 is greater than that of the first water outlet 2522 in the height direction of the cabinet 1, and the first water outlet 2522 communicates with the fourth chamber 53.

For example, the second channel 252 may extend along the height direction of the cabinet 1, the central axis of the second channel 252 is parallel to the height direction of the cabinet 1, and the central axis of the second channel 252 intersects with the rotational axis of the inner drum 3.

For another example, one end of the first water outlet 2522 may be arranged downward, and the vertical line passing through the center of the first water outlet 2522 intersects the central axis of the inner drum 3.

In some embodiments, referring to FIG. 7, the fourth chamber 53 further includes a third sub-chamber 5351 (a first side condensing chamber). The fourth chamber 53 further includes a fourth sub-chamber 5352 (a second side condensing chamber), the third sub-chamber 5351 and the fourth sub-chamber 5352 are located on two sides of the vertical line passing through the center of the first water outlet 2522, and condensate water flows through two sides of the condensing plate 52 in the axial direction of the inner drum 3, thereby increasing the exchange area between the condensate water and the hot and humid air, and ensuring the condensation capability across all regions of the condensing plate 52.

It should be noted that the third sub-chamber 5351 communicates with the fourth sub-chamber 5352.

In some embodiments, referring to FIG. 14, a sixth chamber 253 (a water distribution space) with an opening at a front end is formed on a front side of the first plate 23, the sixth chamber 253 communicates with the sixth chamber 253 through the first water outlet 2522, the sixth chamber 253 communicates with the fourth chamber 53, and the arrangement of the sixth chamber 253 ensures that condensate water can better enter the fourth chamber 53. In some embodiments, referring to FIG. 14, the outer drum 2 further includes a sixth chamber 253, the sixth chamber 253 with an opening at a front end is formed on a front side of the first plate 23, the sixth chamber 253 communicates with the fourth chamber 53 through the first water outlet 2522, and the sixth chamber 253 is provided, thereby facilitating the entry of condensate water into the fourth chamber 53.

In some embodiments, referring to FIG. 13 and FIG. 14, the outer drum 2 further includes a first sealing portion 254, the first sealing portion 254 is located on a front side of the first plate 23, and the first sealing portion 254 surrounds an outer side of the third opening 232.

For example, the top of the first sealing portion 254 is located above the third opening 232, and two ends of the first sealing portion 254 are not higher than the rotating shaft of the inner drum 3 in a vertical direction.

It should be noted that the top of the first sealing portion 254 is an end of the first sealing portion 254 close to the first opening 21.

In some embodiments, referring to FIG. 12, the condensing plate 52 further includes a second sealing portion 522, the first sealing portion 254 is matched with the second sealing portion 522, and the condensing plate 52 and the first plate 23 are hermetically connected through the first sealing portion 254 and the second sealing portion 522.

For example, the first sealing portion 254 includes a first sealing groove, and the first sealing groove is an arc-shaped sealing groove.

For another example, the second sealing portion 522 includes a first sealing plate, the first sealing plate is an arc-shaped plate, and the first sealing plate is inserted into the first sealing groove, so that the first sealing portion and the second sealing portion are sealed; and one side of the condensing plate 52 close to the first plate 23 and the first plate 23 itself are sealed, so that condensate water can be prevented from leaking from above the third opening 232, the influence on the flow of the condensate water to the bottom of the third sub-chamber 5351 and the bottom of the fourth sub-chamber 5352 can be avoided, the condensate water can be ensured to fully fill the entire fourth chamber 53, and the condensation effect can be ensured.

In some embodiments, referring to FIG. 5, FIG. 13 and FIG. 14, the second opening 231 is located on a side portion of the sixth chamber 253, the outer drum 2 further includes a third sealing portion 255, and the third sealing portion 255 is located on one side of the first plate 23 close to the inner drum 3. For example, the third sealing portion 255 is located between the second opening 231 and the sixth chamber 253, and the third sealing portion 255 abuts against the condensing plate 52, so that condensate water does not flow from the side of the outer drum 3 to the second opening 231, thereby avoiding the increase of the drying burden caused by higher humidity of the air due to the fact that the air in the outer drum 3 carries the condensate water when flowing to the second opening 231.

It should be noted that the third sealing portion 255 is a sealing convex rib, the sealing convex rib is arranged in the fourth chamber 53, and the sealing convex rib abuts against a side wall of the fourth chamber 53.

For example, the sealing convex rib may be arranged in the second sub-chamber 533.

In some embodiments, referring to FIG. 13 and FIG. 14, the outer drum 2 further includes a fourth sealing portion 256, the fourth sealing portion 256 is located on one side of the first plate 23 close to the inner drum 3, and the fourth sealing portion 256 surrounds the second opening 231.

For example, the fourth sealing portion 256 is a second sealing groove.

In some embodiments, referring to FIG. 12, the condensing plate 52 includes a fifth sealing portion 523, the fifth sealing portion 523 is a second sealing plate, and the second sealing plate is inserted into the second sealing groove to prevent water in the fourth chamber 53 from overflowing upward to the second opening 231.

In some embodiments, referring to FIG. 15, the laundry treatment apparatus 100 further includes a bearing 55, the bearing 55 is arranged in the third hole 232, and the rotating shaft 54 is inserted into the bearing 55, so that the rotating shaft 54 can be rotatably connected to the inner drum 3.

For example, one end of the rotating shaft 54 close to the first opening 21 is connected to the inner drum 3.

In some embodiments, referring to FIG. 5, the laundry treatment apparatus 100 further includes a motor 56, the motor 56 is arranged on a rear side of the first plate 23, the motor 56 is connected to the rotating shaft 54, and the motor 56 is configured to drive the rotating shaft 54 to rotate so as to drive the inner drum 3 to rotate.

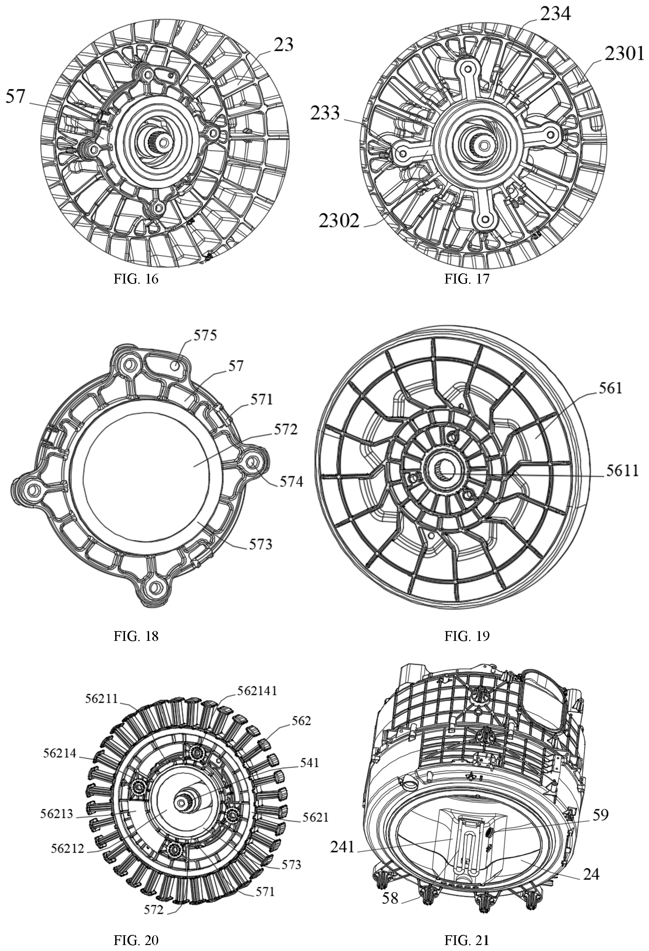

In some embodiments, referring to FIG. 16 and FIG. 18, the laundry treatment apparatus 100 further includes an adapting portion 57 (an adapter), the adapting portion 57 is arranged between the first plate 23 and the motor 56, the adapting portion 57 is fixedly connected to the first plate 23, and the adapting portion 57 is connected to the motor 56. For example, referring to FIG. 19, the adapting portion 57 is arranged between one side of the first plate 23 away from the inner drum 3 and the motor 56.

In this way, the adapting portion 57 is provided, so that the adapting portion 57 is connected to the motor 56 and the outer drum 2, respectively; and when the motor 56 is required to be replaced, only the adapting portion 57 and the motor 56 are required to be replaced without replacing the outer drum 2, so that the production cost can be saved, and the universality of the outer drum 2 can be improved.

For example, referring to FIG. 18 and FIG. 20, the adapting portion 57 and the motor 56 are snap-fitted, the laundry treatment apparatus 100 further includes a first snap-fitting portion 571, the adapting portion 57 is connected to the first snap-fitting portion 571, the laundry treatment apparatus 100 further includes a second snap-fitting portion 56211, the motor 56 is connected to the second snap-fitting portion 56211, and the first snap-fitting portion 571 and the second snap-fitting portion 56211 are snap-fitted to facilitate the mounting of the adapting portion 57 and the motor 56.

In some embodiments, referring to FIG. 19 and FIG. 20, the motor 56 includes a rotor 561. The motor 56 further includes a stator 562, and a second snap-fitting portion 56211 is arranged on the stator 562, so that the stator 562 is fixed to the outer drum 2, and the rotor 561 can rotate relative to the outer drum 2.

In some embodiments, the rotor 561 is connected to the rotating shaft 54, and the rotor 561 rotates to drive the rotating shaft 54 to rotate.

It should be noted that the rotor 561 is located on one side of the stator 562 away from the outer drum 2. For example, the rotor 561 is connected to one side of the stator 562 away from the outer drum 2 through a snap-fitting fastener.

For example, referring to FIG. 19 and FIG. 20, the rotor 561 is provided with a second spline 5611 (an internal spline), the rotating shaft 54 is provided with a first spline 541 (an external spline), the first spline 541 is inserted into the second spline 5611, the first spline 541 moves in an axial direction of the rotating shaft 54, and the first spline 541 cannot rotate relative to the second spline 5611.

In some embodiments, referring to FIG. 20, the stator 562 includes a stator bracket 5621, the stator bracket 5621 includes a tenth hole 56212 (a stator through hole), the adapting portion 57 includes an eleventh hole 572 (an adapter through hole), and the rotating shaft 54 passes through the eleventh hole 572 and the tenth hole 56212 to be connected to the rotor 561, thereby preventing the stator bracket 5621 and the adapting portion 57 from interfering with the rotating shaft 54.

In some embodiments, referring to FIG. 20, the stator 562 further includes a first support portion 573 (a first boss), the first support portion 573 is arranged around the eleventh hole 572, and the first support portion 573 is located on one side of the adapting portion 57 close to the stator 562; and when the first snap-fitting portion 571 and the second snap-fitting portion 56211 are snap-fitted, the stator 562 is sleeved on the first support portion 573 through the tenth hole 56212, thereby improving the stability of the connection between the adapting portion 57 and the stator bracket 5621.

It should be noted that the first snap-fitting portion 571 is arranged on one side of the first support portion 573 away from the eleventh hole 572.

In some embodiments, referring to FIG. 20, at least one twelfth hole 56213 (a first clearance hole) is formed in the stator bracket 5621, and the twelfth hole 56213 is configured to provide clearance for the first snap-fitting portion.

For example, at least one twelfth hole 56213 includes a plurality of twelfth holes 56213, and the plurality of twelfth holes 56213 are formed at intervals around the circumference of the tenth hole 56212.

In some embodiments, the twelfth hole 56213 is formed outside the tenth hole 56212, the stator bracket 5621 further includes a first bracket plate, and the first bracket plate is located between the tenth hole 56212 and the twelfth hole 56213. For example, the second snap-fitting portion 56211 is configured as the first bracket plate.

Taking the case where the first snap-fitting portion 571 and the second snap-fitting portion 56211 are snap-fitted as an example, the first snap-fitting portion 571 is inserted into the twelfth hole 56213, the first snap-fitting portion 571 is snap-fitted to the first bracket plate, and the first bracket plate is located between the first snap-fitting portion 571 and the first support portion 573, thereby facilitating the snap-fitting between the adapting portion 57 and the stator bracket 5621.

For example, the first snap-fitting portion 571 is a hook, the hook is inserted into the twelfth hole 56213, and the hook is snap-fitted to the first bracket plate.

For another example, at least one twelfth hole 56213 includes three twelfth holes 56213, and correspondingly, the adapting portion 57 is provided with three first snap-fitting portions 571.

It should be noted that the twelfth hole 56213 may be an arc-shaped hole, and when the stator 562 is rotated, the first snap-fitting portion 571 may slide in the twelfth hole 56213.

In some embodiments, referring to FIG. 20, the stator bracket 5621 includes a fifth plate 56214 (a first fixing plate), the fifth plate 56214 is located between two twelfth holes 56213, and the fifth plate 56214, the adapting portion 57 and the first plate 23 are fixedly connected to each other.

For example, the laundry treatment apparatus 100 further includes a first connecting member, and the first connecting member fixedly connects the fifth plate 56214, the adapting portion 57 and the first plate 23.

It should be noted that the first connecting member may be a screw, thereby facilitating disassembly, assembly and replacement.

In some embodiments, referring to FIG. 17, FIG. 18 and FIG. 20, the outer drum 2 includes at least one eighth hole 233 (a first connection hole), the eighth hole 233 is located on the first plate 23, the adapting portion 57 includes a thirteenth hole 574 (a second connection hole), and the fifth plate 56214 is provided with a fourteenth hole 562141 (a third connection hole). The first connecting member is configured to be inserted into the eighth hole 233, the thirteenth hole 574 and the fourteenth hole 562141, and to connect the first plate 23, the adapting portion 57 and the stator 562.

It should be noted that the fourteenth hole 562141 can correspond to the thirteenth hole 574 by rotating the stator 562, thereby facilitating the connection between the adapting portion 57 and the stator 562.

For example, at least one eighth hole 233 includes four eighth holes 233, and the four eighth holes 233 may be evenly spaced around the circumference of the rotating shaft 54.

In some embodiments, referring to FIG. 17 and FIG. 18, the adapting portion 57 includes a first positioning portion 575, the outer drum 2 includes a second positioning portion 234, the second positioning portion 234 being located on the first plate 23, and the first positioning portion 575 is inserted into an outer side of the second positioning portion 234, or the first positioning portion 575 is sleeved outside the second positioning portion 234, so that the adapting portion 57 can be positioned on the first plate 23, thereby facilitating the assembly of the first positioning portion 575 and the second positioning portion 234 and preventing incorrect assembly.

For example, the first positioning portion 575 is arranged on one side of the adapting portion 57 close to the thirteenth hole 574, the first positioning portion 575 is located on one side of the first snap-fitting portion 571 away from the eleventh hole 572, and the second positioning portion 234 is arranged opposite to the first positioning portion 575.

In some embodiments, referring to FIG. 15 and FIG. 17, the first plate 23 includes a third body 2301 (an outer drum rear wall body). The first plate 23 further includes a bearing seat 2302, the bearing seat 2302 includes a third hole 232, the third hole 232 penetrates through the bearing seat 2302 in the front-rear direction of the cabinet 1, and the third body 2301 is inserted in an outer side of the bearing seat 2302, thereby facilitating the maintenance and replacement of the third body 2301 and the bearing seat 2302.

It should be noted that the third body 2301 and the bearing seat 2302 may also be integrally formed, thereby facilitating processing and production and reducing the cost. In some embodiments, the bearing seat 2302 is connected to the adapting portion 57. For example, the eighth hole 233 is located on the bearing seat 2302, so that the bearing seat 2302 can be connected to the adapting portion 57; and a second positioning portion 234 is arranged on the bearing seat 2302, thereby being beneficial for the alignment of the bearing seat 2302 and the adapting portion 57, and facilitating the connection between the bearing seat 2302 and the adapting portion 57.

In some embodiments, referring to FIG. 5 and FIG. 6, the outer drum 2 includes a first sub-outer drum 201 (a rear outer drum). The outer drum 2 further includes a second sub-outer drum 202 (a front outer drum). In the front-rear direction of the cabinet 1, the first sub-outer drum 201 is arranged at the rear of the second sub-outer drum 202, and the first plate 23 is disposed at a rear end of the first sub-outer drum 201.

It should be noted that the rear end of the first sub-outer drum 201 is an end of the outer drum 2 away from the first opening 21.

In some embodiments, the bearing 55 is arranged in the bearing seat 2302, and the bearing 55 is in interference fit with the bearing seat 2302, so that the bearing 55 cannot move relative to the bearing seat 2302, and it is beneficial for the transmission of power from the motor 56.

For example, the bearing 55 includes a first bearing, and the first bearing is located at one end of the third hole 232 closer to the inner drum 3. The bearing 55 further includes a second bearing, and the second bearing is located at one end of the third hole 232 closer to the motor 56.

In some embodiments, referring to FIG. 21, the outer drum 2 includes a second plate 24, and the second plate 24 is arranged around the motor 56.

In some embodiments, referring to FIG. 21, the outer drum 2 includes a fifth chamber 241, an inner side of the second plate 24 extends in a direction of the second plate 24 away from the inner drum 3 to form the fifth chamber 241, and the fifth chamber 241 is located at a front end of the second plate 24.

It should be noted that the front end of the second plate 24 is an end of the second plate 24 away from the first plate 23.

For example, referring to FIG. 21, the fifth chamber 241 is located on an outer side of the second plate 24 toward the second plate 24 close to the motor 56, and the second plate 24 is recessed toward one side away from the motor 56 to form the fifth chamber 241 (a heating chamber).

For another example, the fifth chamber 241 is arranged at the bottom of the outer drum 2.

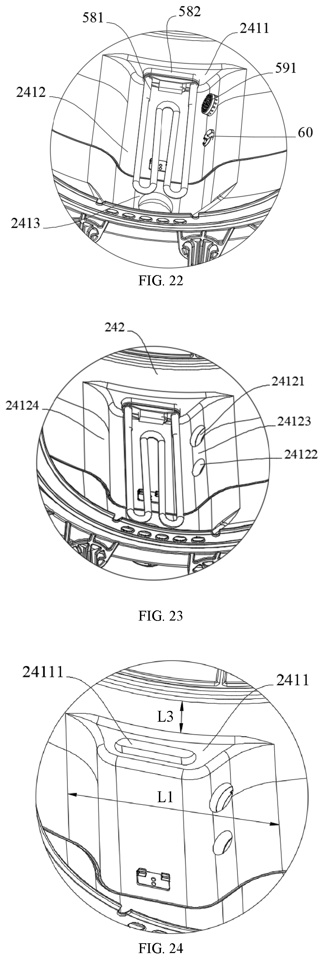

In some embodiments, referring to FIG. 22, the outer drum 2 further includes at least one first sub-plate 2411 (a heating chamber rear wall). The outer drum 2 further includes at least one second sub-plate 2412 (a heating chamber side wall). The outer drum 2 further includes a third sub-plate 2413 (a heating chamber bottom wall). The first sub-plate 2411 is located at one end of one of the at least one second sub-plate 2412 away from the first opening 21, and the first sub-plate 2411 is connected to the second sub-plate 2412.

For example, the first sub-plate 2411 is connected to a rear end of the second sub-plate 2412, and the third sub-plate 2413 is connected to a bottom end of the second sub-plate 2412 away from the motor 56.

It should be noted that the rear end of the second sub-plate 2412 is an end of the second sub-plate 2412 close to the first plate 23.

In some embodiments, the laundry treatment apparatus 100 further includes a heating assembly 58, the heating assembly 58 is configured to heat water in the fifth chamber 241 to generate steam, and the generated steam can be used for steaming and ironing of laundry.

For example, the heating assembly 58 is connected to the first sub-plate 2411.

In some embodiments, referring to FIG. 24, the first sub-plate 2411 is provided with a ninth hole 24111 (a heating device mounting hole), the ninth hole 24111 penetrates through the first sub-plate 2411 in the front-rear direction of the cabinet 1, and the heating assembly 58 is arranged in the ninth hole 24111.

In some embodiments, referring to FIG. 22, the heating assembly 58 includes a heating portion 581, the heating portion 581 is inserted into the fifth chamber 241, and the heating portion 581 is configured to heat water in the fifth chamber 241 to generate steam.

For example, the heating portion 581 may be a heating pipe, and the heating pipe includes a plurality of heating sections.

In some embodiments, referring to FIG. 22, the heating assembly 58 further includes a fixing portion 582 (a heating fixing portion), the fixing portion 582 is connected to the heating portion 581, and the fixing portion 582 is connected to the first sub-plate 2411.

For example, the fixing portion 582 is arranged in the ninth hole 24111, and the fixing portion 582 is connected to the first sub-plate 2411.

For another example, a second support portion for supporting the heating portion is also arranged at the heating portion 581, so that one end of the heating portion 581 away from the fixing portion 582 is prevented from tilting downward.

In some embodiments, referring to FIG. 21, the laundry treatment apparatus 100 further includes a sterilization assembly 59, and the sterilization assembly 59 is configured to sterilize liquid in the second chamber 22.

In some embodiments, referring to FIG. 23, the second sub-plate 2412 is provided with a fourth hole 24121 (a sterilization module mounting hole), and the fourth hole 24121 penetrates through the second sub-plate 2412 in a thickness direction of the second sub-plate 2412.

In some embodiments, referring to FIG. 21 and FIG. 23, the sterilization assembly 59 is connected to the second sub-plate 2412, the sterilization assembly 59 is arranged in the fourth hole 24121, and the sterilization assembly 59 is a first sub-sterilization assembly 591 (a hydroxyl module) or an ultraviolet (UV) assembly.

It should be noted that the first sub-sterilization assembly 591 electrolyzes water molecules into reactive oxygen species (ROS); the reactive oxygen species include ozone (O₃ ), ozonide ion (O₃⁻ ), hydrogen peroxide (H₂O₂ ), hydroperoxyl ion (HO₂⁻ ), superoxide anion (O₂⁻ ), hydroxide ion (OH⁻ ) and the like, thereby improving the activity of water; and the reactive oxygen species have high-efficiency sterilization performance, and the reactive oxygen species can rapidly, efficiently and broadly kill bacteria, fungi, viruses and other microorganisms.

The first sub-sterilization assembly 591 includes a coated titanium electrode plate, a smart driving circuit applies a direct-current low voltage (such as 12V) to the coated titanium electrode plate, and water molecules are electrolyzed into the reactive oxygen species through electrochemical reaction.

It should be noted that the ultraviolet assembly (UV assembly) can generate ultraviolet light to sterilize the liquid in the second chamber 22.

In some embodiments, the sterilization assembly 59 is arranged on the second sub-plate 2412, so that occupation of the first sub-plate 2411 can be reduced, excessive width of the fifth chamber 241 can be avoided, it is beneficial for reducing water consumption, and water can be saved. Furthermore, the sterilization assembly 59 is arranged on the laundry treatment apparatus 100, so that the water in the second chamber 22 can be sterilized and disinfected, and sterilization and disinfection during washing and rinsing can be ensured, thereby sterilizing and disinfecting the laundry.

In some embodiments, referring to FIG. 22 and FIG. 23, the laundry treatment apparatus 100 further includes a second sub-sterilization assembly 60 (a turbidity module), and the second sub-sterilization assembly 60 is configured to detect the turbidity of liquid in the second chamber 22.

In some embodiments, referring to FIG. 22 and FIG. 23, the laundry treatment apparatus 100 further includes a fifth hole 24122, the second sub-plate 2412 is provided with the fifth hole 24122 (a turbidity module mounting hole), and the fifth hole 24122 penetrates through the second sub-plate 2412 in a thickness direction of the second sub-plate 2412.

It should be noted that the second sub-sterilization assembly 60 is connected to the second sub-plate 2412, and the second sub-sterilization assembly 60 is located in the fifth hole 24122.

For example, the second sub-sterilization assembly 60 is provided, thereby facilitating the detection of turbidity of the liquid in the second chamber 22 and the determination whether the water is replaced; and furthermore, the second sub-sterilization assembly 60 is arranged on the second sub-plate 2412, thereby preventing the second sub-sterilization assembly 60 from occupying the first sub-plate 2411, reducing the width of the fifth chamber 241, reducing the volume of the fifth chamber 241 and saving water.

It should be noted that the turbidity refers to the degree to which a solution impedes the transmission of light, including light scattering by suspended solids and light absorption by solute molecules. The turbidity of the liquid is not only related to the content of suspended substances in the water, is also related to the size, shape and refractive index of the suspended substances.

In some embodiments, a first side wall 24123 and a second side wall 24124 are arranged opposite to each other on the second sub-plate 2412, the sterilization assembly 59 and the second sub-sterilization assembly 60 are located on either the first side wall 24123 or the second side wall 24124, and the second sub-sterilization assembly 60 is located on one side of the sterilization assembly 59 away from the first sub-plate 2411.

In some embodiments, referring to FIG. 23, one second sub-plate 2412 of the two second sub-plates 2412 is the first side wall 24123. The other second sub-plate 2412 of the two second sub-plates 2412 is the second side wall 24124.

It should be noted that the sterilization assembly 59 and the second sub-sterilization assembly 60 are arranged on the first side wall 24123, so that it is beneficial for reducing the width of the fifth chamber 241, reducing the volume of the fifth chamber 241 and saving water.

It may be understood that the sterilization assembly 59 and the second sub-sterilization assembly 60 may also be arranged on the second side wall 24124.

For example, referring to FIG. 23, a fourth hole 24121 is formed in the first side wall 24123, and the fourth hole 24121 penetrates through the first side wall 24123 in a thickness direction of the first side wall 24123.

For another example, referring to FIG. 23, a fifth hole 24122 is formed in the first side wall 24123, and the fifth hole 24122 penetrates through the first side wall 24123 in the thickness direction of the first side wall 24123.

In some embodiments, referring to FIG. 23 and 24, a vertical distance between the top of the first side wall 24123 and the top of the second side wall 24124 is L1.

In some embodiments, when L1<100 mm, due to the small width of the fifth chamber 241, it is difficult to arrange the heating assembly 58, the sterilization assembly 59 and the second sub-sterilization assembly 60 in the fifth chamber 241.

In some embodiments, when L1≥100 mm, for example, when L1 is 100 mm, 150 mm or 200 mm, it is convenient to arrange the heating assembly 58, the sterilization assembly 59 and the second sub-sterilization assembly 60 in the fifth chamber 241.

In some embodiments, when L1>150 mm, the large width of the fifth chamber 241 leads to a large volume of the fifth chamber 241, thereby wasting more water.

In some embodiments, when L1≤150 mm, for example, when L1 is 100 mm or 150 mm, it is beneficial for reducing the volume of the fifth chamber 241 and saving water.

In some embodiments, when 100 mm≤L1≤150 mm, for example, when L1 is 100 mm, 125 mm or 150 mm, the width of the fifth chamber 241 is ensured to be within a predetermined range, so that the arrangement of the heating assembly 58, the sterilization assembly 59 and the second sub-sterilization assembly 60 in the fifth chamber 241 is facilitated, the normal operation of the heating assembly 58 is ensured, and it is beneficial for reducing the volume of the fifth chamber 241 and saving water.

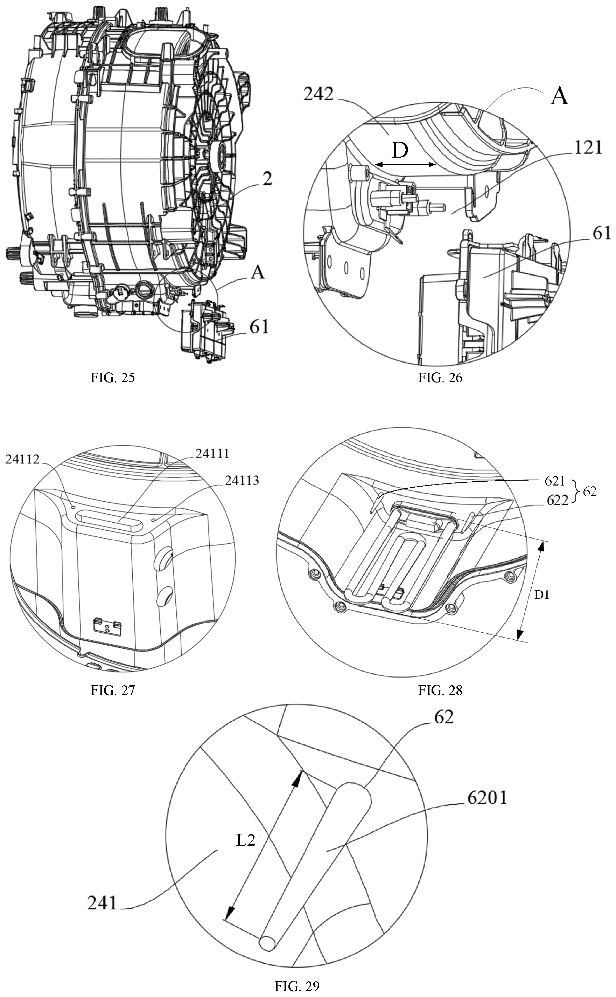

In some embodiments, referring to FIG. 25 and 26, the laundry treatment apparatus 100 further includes an electrical box 61, and the electrical box 61 is arranged in the first chamber 12.

In some embodiments, referring to FIG. 26, the second plate 24 includes a fourth sub-plate 242 (a first outer drum side wall) arranged between the first plate 23 and the first sub-plate 2411, a clearance portion 121 (a first clearance space) is arranged between the fourth sub-plate 242 and the electrical box 61, the clearance portion 121 is configured to provide clearance for the electrical box 61, and the clearance portion 121 is located on one side of the first sub-plate 2411 away from the inner drum 3, so that the outer drum 2 can be prevented from interfering with the electrical box 61 or wiring harness on the electrical box 61, and the outer drum 2 can be prevented from sinking and colliding with the electrical box 61 during shaking.

In some embodiments, referring to FIG. 24 and FIG. 26, in an axial direction of the outer drum 2, a distance between an outer side of the third sub-plate 2413 and an outer side of the first plate 23 is D. Here, the outer side of the third sub-plate 2413 is one side of the third sub-plate 2413 away from the fifth chamber 241, and the outer side of the first plate 23 is one side of the first plate 23 away from the second chamber 22.

In some embodiments, when D<100 mm, due to the small size of the fourth sub-plate 242, it is difficult to provide the clearance portion 121, resulting in interference between the outer side of the third sub-plate 2413 and the electrical box 61.

In some embodiments, when D≥100 mm, for example, when D is 100 mm, 150 mm or 200 mm, the size of the fourth sub-plate 242 is increased; and as the value of D increases, interference between the outer side of the third sub-plate 2413 and the electrical box 61 can be avoided.

In some embodiments, when D>150 mm, the large size of the fourth sub-plate 242 leads to a large volume of the laundry treatment apparatus 100.

In some embodiments, when D≤150 mm, for example, when D is 100 mm or 150 mm, the size of the fourth sub-plate 242 is reduced; and as the value of D decreases, it is beneficial for reducing the volume of the laundry treatment apparatus 100.

In some embodiments, when 100 mm≤D≤150 mm, for example, when D is 100 mm, 125 mm or 150 mm, it is ensured that the clearance portion 121 can provide clearance for the electrical box 61, and it is beneficial for reducing the overall volume of the laundry treatment apparatus 100.

In some embodiments, referring to FIG. 24, in an axial direction of the outer drum 2, a distance between the third sub-plate 2413 and the first plate 23 is L3, and L3 is greater than a thickness of the condensing plate 52, so that it is beneficial for arranging the fifth chamber 241 on the second plate 24 and avoiding interference between the heating assembly 58 in the fifth chamber 241 and the condensing plate 52.

It should be noted that, in the axial direction of the outer drum 2, L3 is positively correlated with a length of the outer drum 2. For example, as the length of the outer drum changes, L3 will also change accordingly.

In some embodiments, in a radial direction of the outer drum 2, a distance from the third sub-plate 2413 to the inner drum 3 is L4.

In some embodiments, when L4<20 mm, due to the short distance from the third sub-plate 2413 to the inner drum 3, the insufficient water is in the second chamber 22, thereby affecting the steaming and ironing function.

In some embodiments, when L4≥20 mm, for example, when L4 is 20 mm or 30 mm, as L4 increases, it is beneficial for improving the steaming and ironing function of the fifth chamber 241.

In some embodiments, when L4>50 mm, due to the small distance from the third sub-plate 2413 to the inner drum 3 means that, in a radial direction of the inner drum 3, a distance from the outer drum 2 to the inner drum 3 is large, resulting in excessive water in the second chamber 22, thereby wasting water.

In some embodiments, when L4≤50 mm, for example, when L4 is 40 mm or 50 mm, the distance from the outer drum 2 to the inner drum 3 is reduced; and as the value of L4 decreases, it is beneficial for reducing water in the second chamber 22 and avoiding water waste.

In some embodiments, when 20 mm≤L4≤50 mm, for example, when L4 is 20 mm, 30 mm, 40 mm or 50 mm, the distance between the third sub-plate 2413 and the inner drum 3 is defined within a predetermined range, thereby avoiding water waste due to excessive water in the second chamber 22 during the steaming and ironing process, and avoiding the influence on the steaming and ironing function by an insufficient amount of water in the second chamber 22.

In some embodiments, referring to FIG. 28, a length of the fifth chamber 241 in a front-rear direction of the laundry treatment apparatus 100 is D1.

In some embodiments, when D1<200 mm, due to the short length of the fifth chamber 241, the heating portion 581 in the fifth chamber 241 will be small, resulting in a poor heating effect, thereby affecting the steaming and ironing function.

In some embodiments, when D1≥200 mm, for example, when D1 is 200 mm or 225 mm, the heating portion 581 in the fifth chamber 241 is large; and as the value of D1 increases, the heating effect in the fifth chamber 241 is good, thereby improving the steaming and ironing function.

In some embodiments, when D1>250 mm, the excessive length of the fifth chamber 241 leads to a large volume of the fifth chamber 241, thereby wasting water.

In some embodiments, when D1≤250 mm, for example, when D1 is 225 mm or 250 mm, it is beneficial for reducing the volume of the fifth chamber 241; and as the value of D1 decreases, it is beneficial for avoiding water waste.

In some embodiments, when 200 mm≤D1≤250 mm, for example, when D1 is 200 mm, 225 mm or 250 mm, a good heating effect of the fifth chamber 241, can be ensured, the steaming and ironing function can be improved, water waste due to excessive water in the second chamber 22 during steaming and ironing can be avoided, and the influence on the steaming and ironing function by an insufficient amount of water in the second chamber 22 can be avoided. Furthermore, compared with the related art, the volume of the fifth chamber 241 can be reduced by 20% or more, for example, the volume of the fifth chamber 241 can be reduced from 1.55 L to 1.18 L, thereby reducing the volume of the fifth chamber 241 and saving water.

In some embodiments, referring to FIG. 27 to 29, the laundry treatment apparatus 100 further includes at least two probes 62, the at least two probes 62 include two probes 62 connected to the first sub-plate 2411, and the probes 62 are inserted in the fifth chamber 241.

In some embodiments, referring to FIG. 28, the at least two probes 62 include a first probe 621. The at least two probes 62 further include a second probe 622. In a width direction of the laundry treatment apparatus 100, the first probe 621 and the second probe 622 are located on two sides of the heating assembly 58.

For example, the first probe 621 is located at a first end of the heating assembly 58, the second probe 622 is positioned at a second end of the heating assembly 58; and when the first probe 621 and the second probe 622 are simultaneously in contact with water in the fifth chamber 241, an electrically conductive connection between the first probe 621 and the second probe 622 is achieved through the water in the fifth chamber 241, thereby detecting the water level in the fifth chamber 241 and avoiding dry burning of the heating portion 581.

For another example, when the first probe 621 and the second probe 622 are not simultaneously in contact with water in the fifth chamber 241, the electrical connection between the first probe 621 and the second probe 622 is interrupted, and the heating portion 581 stops heating, that is, after at least one of the first probe 621 and the second probe 622 is exposed above the water surface, an electrically conductive connection between the first probe 621 and the second probe 622 cannot be achieved through the water in the fifth chamber 241, and a controller is provided to stop the heating portion 581 from heating.

It should be noted that the controller includes a processor. The processor may include a central processing unit (CPU), a microprocessor and an application specific integrated circuit (ASIC), and may be configured to perform the corresponding operations described for the controller when executing programs stored in a non-transitory computer-readable medium coupled to the controller.

In some embodiments, the first probe 621 and the second probe 622 inserted into the fifth chamber 241 are provided, so that it can be determined whether the parts of the first probe 621 and the second probe 622 are inserted in the fifth chamber 241 are exposed above the water surface based on whether an electrically conductive connection between the first probe 621 and the second probe 622 is achieved through the water in the fifth chamber 241, thereby determining the amount of the water in the fifth chamber 241 and determining whether the heating portion 581 stops heating to avoid the dry burning of the heating portion 581.

For example, the probe 62 is arranged on the first sub-plate 2411, so it can be ensured that the dry burning of the heating portion 581 can be avoided when the outer drum 2 is tilted forward.

In some embodiments, referring to FIG. 29, a length of the parts of the first probe 621 and the second probe 622 inserted into the fifth chamber 241 in the front-rear direction of the cabinet 1 is L2.

In some embodiments, when L2<30 mm, due to the short length of the first probe 621 and the second probe 622, when the forward tilt angle of the outer drum 2 is small, at least one of the first probe 621 and the second probe 622 will be exposed above the water surface, causing the heating portion 581 to stop working.

In some embodiments, when L2≥30 mm, for example, when L2 is 30 mm, 40 mm or 50 mm, and the forward tilt angle of the outer drum 2 is small, the first probe 621 and the second probe 622 remain below the water surface, allowing the heating portion 581 to continue working.

In some embodiments, when L2>80 mm, due to the long length of the first probe 621 and the second probe 622, when the forward tilt angle of the outer drum 2 is small, at least one of the first probe 621 and the second probe 622 will be exposed above the water surface, causing the heating portion 581 to stop working.

In some embodiments, when L2≤80 mm, for example, when L2 is 60 mm, 70 mm or 80 mm, and the forward tilt angle of the outer drum 2 is small, the first probe 621 and the second probe 622 remain below the water surface, allowing the heating portion 581 to continue working.

In some embodiments, when 30 mm≤L2≤80 mm, for example, when L2 is 30 mm, 55 mm or 80 mm, the insertion length of the first probe 621 and the second probe 622 into the fifth chamber 241 can be ensured, and the heating portion 581 can be prevented from stopping working when the outer drum 2 is slightly tilted, thereby ensuring that the heating portion 581 can operate stably when the outer drum 2 is tilted within a predetermined range.

In some embodiments, referring to FIG. 24 and FIG. 27, the first sub-plate 2411 includes a sixth hole 24112 (a first probe placing hole). The first sub-plate 2411 further includes a seventh hole 24113 (a second probe placing hole). The sixth hole 24112 and the seventh hole 24113 penetrate through the first sub-plate 2411 in the axial direction of the inner drum 3, the first probe 621 is arranged in the sixth hole 24112, and the second probe 622 is arranged in the seventh hole 24113.

In some embodiments, referring to FIG. 28 and FIG. 29, the probe 62 includes an insertion portion 6201 (a probe insertion portion); the insertion portion 6201 is inserted into the first sub-plate 2411, and in the front-rear direction of the laundry treatment apparatus 100,and the top of the insertion portion 6201 is located above the top of the heating portion 581, so that it is beneficial for reducing the possibility of partial dry burning of the heating portion 581.

For example, in the front-rear direction of the cabinet 1, the insertion portion 6201 is located above the heating portion 581.

In some embodiments, referring to FIG. 29, the central axis of the probe 62 is arranged parallel to the axial direction of the laundry treatment apparatus 100. The probe 62 is in a shape of a circular truncated cone, and the area of an end face of the circular truncated cone close to the first sub-plate 2411 is greater than the area of an end face away from the first sub-plate 2411.

It should be noted that the disclosure of any technical solution of the present disclosure can solve one or more of the above technical problems to a certain extent and achieve a certain disclosure objective; a plurality of technical disclosures may be combined into a whole solution to solve one or more of the above technical problems and achieve a certain disclosure objective; part of the technical disclosures may be combined into a whole solution, and the related technologies and deteriorated solutions are adopted at the same time, but the deterioration tendency can be compensated by the technical disclosure means, and one or more of the above technical problems can be overall solved to a certain extent and a certain disclosure objective can be achieved; and each technical disclosure is combined into a complete technical solution, which forms an organic and indivisible whole solution, thereby overall solving the technical problem and achieving a certain disclosure objective.

Any technical disclosure in the present disclosure as well as recombinations of the plurality of technical disclosures can form a complete technical solution, can solve one or more of the plurality of technical problems and achieve the disclosure objective, is the content of the present disclosure, and is the content that would have been determined directly and unambiguously on the basis of the content of the present disclosure.

Those skilled in the art will understand that the scope of the present disclosure is not limited to the above specific embodiments, and certain elements of the embodiments may be modified and replaced without departing from the spirit of the present application. The scope of the present application is limited by the appended claims.

## Claims

1. A laundry treatment apparatus, comprising:
a cabinet, comprising a first chamber;
a door, connected to the cabinet;
an outer drum, arranged in the first chamber and comprising:
a second chamber;
a first body, the second chamber being defined in the first body;
a first opening, the second chamber communicating with the first opening;
a first plate, located at one end of the first body away from the first opening; and
a second opening, formed in the first plate;
an inner drum, arranged in the second chamber, being rotatable relative to the outer drum and comprising:
a third chamber, communicating with the second chamber;
a first channel, formed outside the outer drum, a first end of the first channel communicating with the second opening, a second end of the first channel communicating with the second chamber, and the second opening being configured to allow hot and humid air in the third chamber to flow into the first channel; and
a condensing plate, arranged in the second chamber, connected to the first plate, configured to perform heat exchange on the hot and humid air to condense the moisture in the hot and humid air, and comprising:
a shielding region, configured to allow the hot and humid air after heat exchange to enter the first channel,
wherein the shielding region comprises:
a filtering portion, configured to filter lint from the hot and humid air flowing through the shielding region; and
a first hole, penetrating through the shielding region in a thickness direction of the condensing plate.

2. The laundry treatment apparatus according to claim 1, wherein the filtering portion is a second hole penetrating through the shielding region in the thickness direction of the condensing plate.

3. The laundry treatment apparatus according to claim 1 or 2, wherein taking a plane perpendicular to an axial direction of the outer drum as a reference plane, an area of an orthogonal projection of the first plate on the reference plane is M1, an area of an orthogonal projection of the condensing plate on the reference plane is M2, and M1 is greater than M2.

4. The laundry treatment apparatus according to claim 3, wherein M1 and M2 satisfy the following relational expression: M2/M1>1/4.

5. The laundry treatment apparatus according to any one of claims 1 to 4, wherein taking a plane perpendicular to the axial direction of the outer drum as a reference plane, an area of the second opening projected on the reference plane is M3, an area of the first hole projected on the reference plane is M4, and M3 and M4 satisfy the following relational expression: 1>M4/M3≥1/4.

6. The laundry treatment apparatus according to claim 5, wherein an area of the second hole projected on the reference plane is M5, and M4 and M5 satisfy the following relational expression: M5 is less than M4.

7. The laundry treatment apparatus according to claim 2, wherein a length direction of the second hole is substantially parallel to a height direction of the cabinet.

8. The laundry treatment apparatus according to any one of claims 1 to 7, further comprising:
a fourth chamber, formed between the condensing plate and the first plate, wherein the fourth chamber allows condensate water to flow through.

9. The laundry treatment apparatus according to any one of claims 1 to 8, wherein the first plate further comprises a third hole, and the third hole penetrates through the first plate in a thickness direction of the first plate; and
the laundry treatment apparatus further comprises:
a rotating shaft, located in the third hole and driving the inner drum to rotate relative to the outer drum;
a first sealing portion, located on one side of the first plate close to the inner drum and surrounding an outer side of the third hole, a top end of the first sealing portion being located above the third hole, and two ends of the first sealing portion being lower than the rotating shaft in a vertical direction; and
a second sealing portion, adapted to the first sealing portion, the condensing plate and the first plate being connected through the first sealing portion and the second sealing portion.

10. The laundry treatment apparatus according to claim 8, wherein the outer drum further comprises a second channel, wherein the second channel comprises a water inlet and a water outlet, wherein in a height direction of the cabinet, the position of the water inlet is higher than the position of the water outlet, wherein the water outlet communicates with the fourth chamber; the water outlet is formed toward the bottom of the cabinet, wherein a vertical line passing through a center of the water outlet intersects with a central axis of the inner drum, wherein the fourth chamber comprises a first sub-chamber and a second sub-chamber, and the first sub-chamber and the second sub-chamber are located on two sides of the vertical line passing through the center of the water outlet.

11. The laundry treatment apparatus according to any one of claims 1 to 10, wherein the outer drum further comprises:
a second plate, arranged around the first plate, the first plate and the second plate jointly defining the second chamber;
a fifth chamber, one part of the second plate being configured to be recessed in a direction away from the inner drum to form the fifth chamber, and the fifth chamber being located at one end of the second plate away from the first plate;
a first sub-plate; and
a second sub-plate, the first sub-plate being located at one end of the second sub-plate away from the first opening and connected to the second sub-plate;
wherein the laundry treatment apparatus further comprises:
a heating assembly, configured to heat water in the fifth chamber to generate steam, connected to the first sub-plate and comprising a heating portion, the heating portion being arranged in the fifth chamber;
a fourth hole, the third hole being formed in the second sub-plate, and the fourth hole penetrating through the second sub-plate in a thickness direction of the second sub-plate; and
a sterilization assembly, configured to sterilize liquid in the first chamber, connected to the second sub-plate and located in the fourth hole.

12. The laundry treatment apparatus according to claim 11, wherein the sterilization assembly is a hydroxyl assembly or an ultraviolet lamp assembly.

13. The laundry treatment apparatus according to claim 11 or 12, further comprising:
a fifth hole, formed in the second sub-plate and penetrating through the second sub-plate in the thickness direction of the second sub-plate; and
a turbidity assembly, configured to detect the turbidity of liquid in the second chamber, connected to the second sub-plate and located in the fourth hole.

14. The laundry treatment apparatus according to claim 13, wherein the second sub-plate comprises a first side wall and a second side wall arranged opposite to each other, the sterilization assembly and the turbidity assembly are located on either the first side wall or the second side wall, and the turbidity assembly is located on one side of the sterilization assembly away from the first sub-plate.

15. The laundry treatment apparatus according to claim 14, wherein a vertical distance between a top of the first side wall and a top of the second side wall is L1, and L1 satisfies the following relational expression: 100 mm≤L1≤ 150mm.

16. The laundry treatment apparatus according to any one of claims 11 to 15, further comprising:
at least two probes, connected to the first sub-plate and arranged in the fifth chamber,
wherein the at least two probes comprise:
a first probe; and
a second probe, the first probe and the second probe being located on two sides of the heating assembly in a width direction of the cabinet,
wherein when the first probe and the second probe are simultaneously in contact with water in the fifth chamber, the first probe and the second probe are electrically connected through the water in the fifth chamber; and
wherein when the first probe and the second probe are not simultaneously in contact with the water in the fifth chamber, an electrical connection between the first probe and the second probe is disconnected and the heating portion stops heating operation.

17. The laundry treatment apparatus according to claim 16, wherein a length of a part of the at least two probes inserted into the fifth chamber in a front-rear direction of the cabinet is L2, and L2 satisfies the following relational expression: 30 mm≤L2≤ 80 mm.

18. The laundry treatment apparatus according to claim 16 or 17, wherein the first sub-plate comprises:
a sixth hole and a seventh hole, the sixth hole and the seventh hole penetrating through the first sub-plate in the front-rear direction of the cabinet, the first probe being arranged in the sixth hole, and the second probe being arranged in the seventh hole.

19. The laundry treatment apparatus according to claim 9, further comprising:
a bearing, arranged in the third hole;
a rotating shaft, connected to the bearing, one end of the rotating shaft close to the first opening being connected to the inner drum;
a motor, arranged on one side of the first plate away from the inner drum, connected to the rotating shaft and driving the rotating shaft to rotate so as to drive the inner drum to rotate; and
an adapting portion, arranged between the first plate and the motor, fixedly connected to the first plate and connected to the motor.

20. The laundry treatment apparatus according to claim 19, further comprising:
a first snap-fitting portion, connected to the adapting portion; and
a first snap-fitting portion, connected to the motor, the first snap-fitting portion being snap-fitted to the second snap-fitting portion.
